# EUROPEAN PATENT SPECIFICATION

(11) **EP 3 760 458 B1**
(45) Date of publication and mention of the grant of the patent: **17.08.2022**
(21) Application number: 20184117.8
(22) Date of filing: 06.07.2020
(51) Int. Cl.: B60G 11/26, B60G 17/04, F15B 1/02

(54) **ADAPTIVE SUSPENSION HYDRAULIC ARRANGEMENT FOR AN OFF-ROAD VEHICLE**
AKTIVE HYDRAULISCHE FEDERUNGSEINRICHTUNG FÜR EIN GELÄNDEFÄHIGES FAHRZEUG
ARRANGEMENT D'UNE SUSPENSION ADAPTIVE HYDRAULIQUE POUR UN VÉHICULE TOUT-TERRAIN

(30) Priority: 05.07.2019 IT 201900010992
(43) Date of publication of application: 06.01.2021
(73) Proprietor: CNH Industrial Italia S.p.A., 10135 Torino (IT)
(72) Inventor: Ciarrocchi, Marco Pietro, 64027 Sant'Omero (TE) (IT)
(74) Representative: CNH Industrial IP Department

(56) References cited:
- EP-A1- 0 543 321
- EP-A1- 2 263 891
- EP-A1- 2 628 861
- DE-A1- 4 115 594
- DE-A1-102017 011 526
- DE-B3- 10 320 954
- US-A1- 2007 278 752
- US-A1- 2017 284 064

## Description

### TECHNICAL FIELD

The present invention concerns a hydraulic suspension arrangement, in particular an adaptive suspension hydraulic arrangement for an off-road vehicle, such as an agricultural vehicle.

### BACKGROUND OF THE INVENTION

Off-road vehicles usually comprise suspensions which connect the axle to the chassis of this latter and configured to dampen a movement of the axle with respect to chassis so as to avoid the transmission of road irregularities to chassis and, thus, to driver's cab. Indeed, the aforementioned movements are particular annoying for the driver of the vehicle.

An essential element of suspensions for off-road system is a hydraulic cylinder, of known typology, and comprising a road chamber and a piston chamber.

It is known to provide hydraulic arrangements, e.g. the one shown in EP3330111 A1, configured to charge the hydraulic cylinder and to set predefined properties, e.g. stiffness or dumping, of this latter. Such properties of the hydraulic cylinder are essential since they deeply influence the transmission of road irregularities to driver's cab.

However, proposed circuits are quite complex and do not allow to provide a complete variable setting, when needed, of the hydraulic cylinder. Indeed, known circuits use a great number of electronic valves, which, furthermore, need to be activated in a very short time in order to compensate dynamic effect on suspension cylinder. US2007278752 discloses a suspension system according to the preamble of claim 1 that dampens motion between two components of a vehicle, such as the wheels and the chassis, a piston defines first and second chambers in the cylinder and has a shaft with an end surface exposed to pressure within a third chamber of the cylinder. DE4115594 discloses a proportional pressure-regulating valve for an actuator with a main valve having a valve spool which is axially displaceable from a neutral midposition, blocking a valve port connected to the actuator.

Accordingly, there is room to improve the control of hydraulic cylinder for an adaptive suspension hydraulic circuit for an off-road vehicle so that it is possible to control in in a wide working range possibilities the hydraulic cylinder in a compact and economic way.

An aim of the present invention is to satisfy the above mentioned needs in a cost-effective and optimized way.

### SUMMARY OF THE INVENTION

The aforementioned aim is reached by a suspension hydraulic arrangement for off-road vehicles as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a hydraulic circuit scheme of an example of a suspension hydraulic arrangement ;
- Figure 2 is a hydraulic circuit scheme of a first embodiment of a suspension hydraulic arrangement according to the invention;
- Figure 3 is a hydraulic circuit scheme of a second embodiment of a suspension hydraulic arrangement according to the invention;
- Figure 4 is a transversal schematic sectional view of a possible embodiment of a module of the suspension hydraulic arrangement according to the invention in a first operative condition; and
- Figure 5 is a transversal schematic sectional view of a possible embodiment of a module of the suspension hydraulic arrangement according to the invention in a second operative condition.

### DETAILED DESCRIPTION OF THE INVENTION

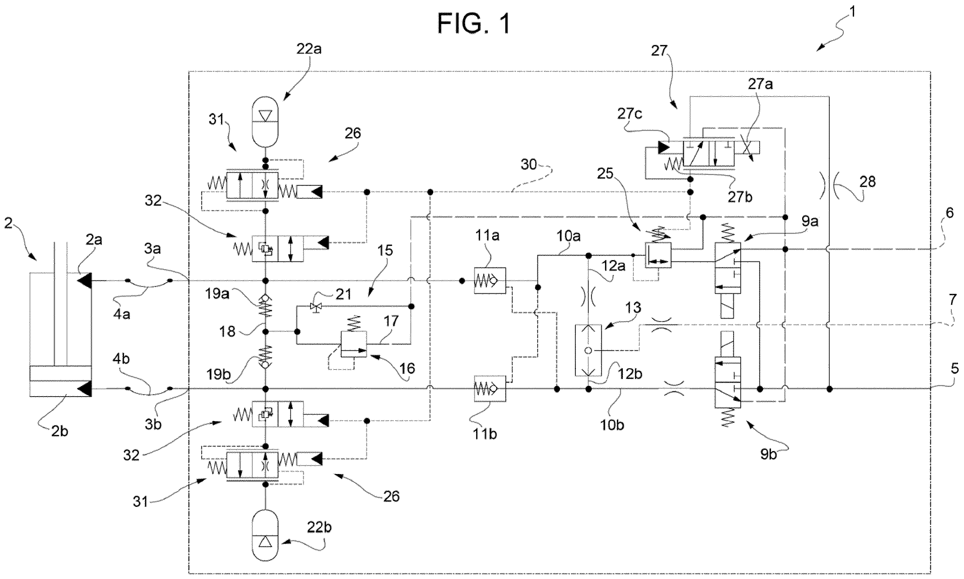

Figure 1 discloses a suspension hydraulic arrangement 1 for off-road vehicles configured to control hydraulic properties of a hydraulic cylinder 2, of known typology, provided with a rod chamber 2a and a piston chamber 2b. Preferably, rod and piston chambers 2a, 2b are fluidly connected to outputs 3a, 3b hydraulic arrangement 1 via respective hoses 4a, 4b.

hydraulic arrangement 1 is fluidly connectable to a source 5 of fluid in pressure and to a discharge 6. Furthermore, hydraulic arrangement 1 is configured to generate a load sensing signal 7 suitable for controlling source 5, not hereby described for sake of brevity.

Hydraulic arrangement 1 comprises a pair of valves 9b, 9a both fluidly connected from one side to source 5 and discharge 6 and, on the other side to a first conduit 10b fluidly connected to output 3b and a second conduit 10a fluidly connected to output 3a.

In particular, valves 9a, 9b are three ways - two positions valves and are configured to assume a first position into which they fluidly connect source 5 to respective conduits 10a, 10b and a second position into which they fluidly connect respective conduits 10a, 10b to discharge 6. Preferably, valves 9a, 9b are electro-actuated valves and, more preferably, are positioned in rest condition thanks to the force of an elastic element, such rest condition being the aforementioned second condition of valves 9a, 9b.

Hydraulic arrangement 1 further comprises a pair of isolation valves 11a, 11b, respectively for conduits 10a, 10b, configured to allow the passage of fluid only from valves 9a, 9b towards outputs 3a, 3b and not vice versa. Preferably such isolation valves 11a, 11b are check-valves.

Hydraulic arrangement 1 further comprises a pair of conduits 12a, 12b fluidly connecting conduits 10a, 10b in a portion comprised between valves 9a, 9b and isolation valves 11a, 11b with a shuttle valve 13. This latter selects the greatest hydraulic signal between the ones taken by conduits 12a, 12b from conduits 10a, 10b; such signal is then the hydraulic load sensing signal 7 which, as said, may be used to control source 5 flow in a known way.

Hydraulic arrangement 1 further comprises a safety module 15 fluidly interposed between conduits 10a, 10b and configured to discharge conduits 10a and/or 10b in case of overpressures. In particular, safety module 15 if fluidly interposed between conduits 10a, 10b downstream with respect isolation valves 10a, 10b and upstream to outputs 3a, 3b.

Preferably, safety module 15 comprises a relief valve 16 fluidly interposed via a conduit 17 between a conduit 18 fluidly connecting conduits 10a, 10b and discharge 6. Safety module 18 further comprises a first and a second check valves 19a, 19b respectively fluidly interposed on conduit 18 between conduit 17 and each of conduit 10a, 10b.

Check valves 19a, 19b are configured to allow passage of fluid from conduit 10a, 109b towards relief valve 16 if pressure reaches a preset value. Similarly, this latter allows the passage of fluid in conduit 17 towards discharge 6 only if such pressure in conduits 10a, 10b reaches a preset emergency value.

Safety module 15 may further comprise a override valve 21 fluidly interposed in parallel to relief valve 16 on conduit 17 and configured to allow manual discharge of conduits 10a, 10b, when needed by the user of the system.

Hydraulic circuit 1 furthermore comprises a first accumulator 22a and a second accumulator 22b fluidly connected respectively to first and second conduits 10a, 10b between output 3a, 3b and isolation valves 11a, 11b, such accumulators 22a, 22b are configured to allow filling or spilling of, respectively, rod chamber 2a and piston chamber 2b.

Hydraulic circuit 1 further comprises, con conduit 10a, a pressure regulating valve 25 fluidly interposed between valve 9a and isolation valve 11a. Preferably such pressure regulating valve 25 comprises a relief valve.

Furthermore, circuit 1 comprise a first and a second dump modules 26 fluidly interposed between each of accumulators 22a, 22b and respective first and second conduits 10a, 10b. Such dump module 26 are configured to vary the passage of fluid between conduits 10a, 10b and accumulators 22a, 22b so as to vary the stiffness/reactivity of cylinder 2.

According to an aspect of the invention, hydraulic circuit 1 comprises a control valve 27 configured to generate a hydraulic signal 30 configured to control at least one between pressure regulating valve 25 and dump modules 26.

According to the example of figure 1, control valve 27 comprises a proportional electro-actuated valve fluidly connected to source 5, preferably via an orifice 28, to pressure regulating valve 25 and dump modules 26 and to discharge 6. Accordingly, control valve is a three-way two position proportional valve configured to allow the generation of hydraulic signal 30 in a range comprises between a first status wherein all the spilled fluid from source 5 is sent to modules 26 and valve 25 and a second status wherein no hydraulic signal 30 is generated and valve 25 is discharged to discharge 6.

In particular, according to the described embodiment, control valve 27 is actuated by a solenoid 27a acting on a side of spool of valve 27 against the force of an elastic element 27b and of a hydraulic signal 27c taken downstream to valve 27.

In function of the force modulated by solenoid 27a via an electric signal, e.g. given by an electronic control unit of the vehicle, a hydraulic signal 30 is sent to pressure regulating valve 25 to regulate the pressure limit of the fluid which can flow into conduit 10a, i.e. to rod chamber 2a, thereby modifying suspension stiffness. In parallel, hydraulic signal 30 is sent to dump modules 26.

Advantageously, each dump module 26 comprises a stiffness control valve 31 and a lock valve 32 fluidly connected in series between the respective cylinder 22a, 22b and rod chamber 2a/piston chamber 2b, wherein the stiffness control valve 31 is upstream with respect to lock valve 32.

In particular, stiffness control valve 31 is a proportional hydraulically actuated valve configured to allow the passage of fluid proportionally to a hydraulic signal between a first condition wherein fluid may free flow from lock valve 32 towards accumulator 22a, 22b and a second condition wherein fluid may flow from accumulator 22a, 22b to lock valve 32 with a preset restriction.

In particular, according to the described example stiffness control valve 31 is fluidly connected to control valve 27, i.e. is actuated by hydraulic signal 30; this latter acts on a first side on the spool of stiffness control valve 31 together with an elastic elements and a signal taken upstream to valve 31 itself against to another elastic element and a signal taken downstream to valve 31 itself.

Advantageously, lock valve 32 is a hydraulically actuated valve configured to assume a first position into which it allows the passage of fluid between conduit 10a, 10b and stiffness control valve 31 and a second position wherein fluid cannot flow, except for emergency situation, between conduit 10a, 10b and stiffness control valve 31.

In particular, according to the described example lock valve 32 is fluidly connected to control valve 27, i.e. is actuated by hydraulic signal 30; this latter acts on a first side on the spool of against to an elastic element.

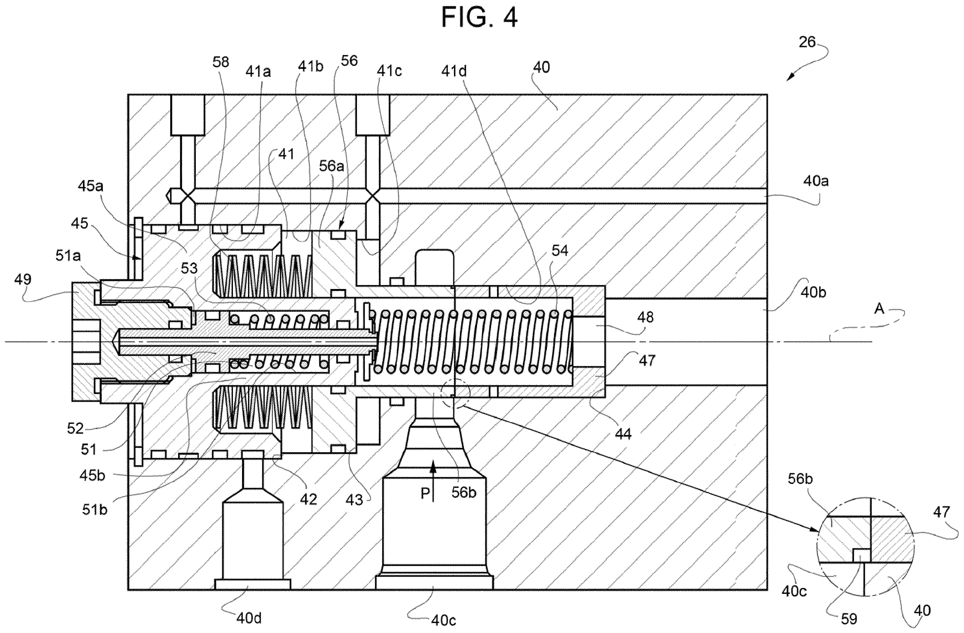

Figure 4 discloses a physical embodiment of dump module 26, comprising the aforementioned valves 31, 32 described above.

In particular, such dump module comprises a housing 40 defining a first opening 40a for the passage of hydraulic signal 30, aa second opening 40b fluidly connected to accumulator 22a, 22b, a third opening 40c fluidly connected to conduit 10a, 10b and a fourth opening 40d fluidly connected to drain.

Furthermore, housing 40 internally defines a cavity 41 configured to allows fluidic communication between the above mentioned openings 40a, 40b, 40c, 40d and, potentially, opened to the environment, e.g. for inspection or maintenance of the elements house in cavity 41.

Cavity 41 is preferably cylindrical and comprises preferably a first, a second, a third and a fourth portions 41a, 41b, 41b, 41c having each a diameter lower with respect to the other passing from one side of housing 40 opposite to second opening 40b towards this latter. Accordingly, first portion 41a has the greatest diameter, second portion 41b has a diameter lower than first portion 41a but greater than third portion 41c, third portion 41c has a diameter lower than second portion 41b but greater than fourth portion 41d which has the lowest diameter. Accordingly, in cavity 41 housing 40 defines (at least) a first shoulder 42 between first and second cavity portions 41a, 41b, a second shoulder 43 between second and third cavity portions 41b, 41c and a third shoulder 44 between fourth cavity portion 41d and second opening 40b.

Dump module 26 comprises a first sleeve 45, fixedly carried inside first portion 41a of cavity 41 in contact with first shoulder 42 and a retaining ring 45 and a second sleeve 47 carried inside fourth portion 41d of cavity 41d in contact with third shoulder 44 from one side and opened towards third opening 40c on the opposite side.

Advantageously second sleeve 47 comprises a cylindrical hollow element, axially opened towards second opening 40b and cavity 41. The opening faced towards second opening 40b is lower than the opening communicating with cavity 41 thereby defining a narrowing 48 for fluid passing through this latter.

First sleeve 45 comprises a cylindrical portion 45a and a pin portion 45b extending axially around an axis A of second opening 40b from radial portion 41a. Pin portion 45b is advantageously hollow and closed by a cap 49 from a side opposite with respect to the side more near to second opening 40b.

Accordingly, pin portion 45b defines a inner cavity 51 into which may slide an actuator 52 in tight manner so as to divide inner cavity 51 into a first portion 51a and a second portion 51b. First portion 51a is in fluid communication through first sleeve 45 with first opening 40a, i.e. with hydraulic signal 30, while second portion 51b houses a first elastic element 53, e.g. a coil spring, which acts between actuator 52 and pin portion 45b to maintain actuator 52 so that first portion 51a of cavity 51 is compressed at minimum.

Actuator 52 is configured to extend axially around axis A and slide in cavity 51 along such direction and passes through, in a sealed way, to pin portion 45b extending into fourth portion 41d of cavity 41. Actuator 52 acts against a second elastic element 54, e.g. a coil spring, housed into fourth portion 41d and acting between actuator 52 and second sleeve 47.

According to the above arrangement, second sleeve 47 may move along axis A, inside fourth portion 40d in tight manner, in function of the pressure exerted by fluid flowing though narrowing 48, i.e. from second opening 40b, i.e. from accumulator 22a, 22b, towards third opening 40c, i.e. towards cylinder 2. Elastic element 54, actuated by actuator 52, which is then actuated by fluid of pressure signal 30, acts against such pressure, trying to maintain second sleeve 47 in contact with shoulder 44.

Dump module 26 further comprises a third sleeve 56 configured to slide along axis A on portion 45b of first sleeve 45; such third sleeve 56 comprises a cylindrical portion 56a housed in tight manner inside second portion 41b of cavity 41 and configured to move between a first position in contact with second shoulder 43 and a second position in contact with cylindrical portion 45a of first sleeve 45, i.e. in correspondence of first shoulder 42.

Third sleeve 56 further comprises a pin portion 56b extending axially from cylindrical portion 56a around axis A so that it contacts second sleeve 47, in certain conditions described functionally hereinafter. Pin portion 56b is hollow and is configured to slide on pin portion 45a of first sleeve 45.

As said, hydraulic signal 30 may flow from first opening 40a towards first portion 41a of cavity 41 but also into third portion 41c of cavity 41. Accordingly, it may act by pressure against cylindrical portion 56a of third sleeve 56 pushing this latter towards first sleeve 45 along axis A.

Dump module 26 further comprises an elastic element 58, e.g. Belleville spring washers, housed inside portions 41a, 41b of cavity 41 and acting between first sleeve 45 against movement of third sleeve 56 towards first sleeve 45. Accordingly, force of elastic element 58 acts against force imparted by hydraulic signal 30.

Further, as can be seen by the enlarged portion in figure 4, third sleeve 56 comprises an annular indentation 59 realized on the terminal edge cooperating at contact with second sleeve 47. Such indentation 59 can be an annular recess around axis A of third sleeve 56.

The operation of the above described embodiment of hydraulic arrangement 1 and of dump module 26 is the following.

The user may act, imparting a proper electric input on control valve 27, to provide a hydraulic signal 30 which is proportional to such electric input. Accordingly, pressure regulating valve 25 may vary accordingly the pressure of fluid which is directed towards rod chamber 2a.

In parallel, hydraulic signal 30 can control dump module 26 to vary stiffness of cylinder 2.

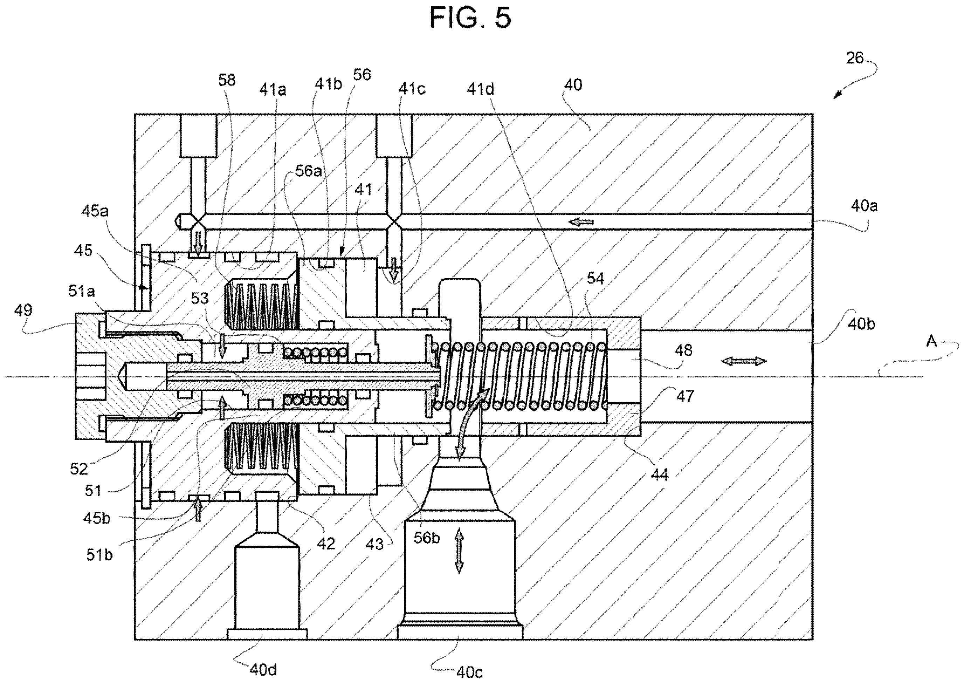

Indeed, making reference to figure 5, hydraulic signal 30 will flow from first opening 40a towards cavity 51, via first portion 41a and first sleeve 45, thereby pushing actuator 52 against second sleeve 47. In parallel, hydraulic signal 30 will also flow from first opening 40a towards third portion 41c thereby acting against force of elastic element 58 and pushing third sleeve 56 towards first sleeve 45.

Accordingly, fluid may flow between second opening 40b and third opening 40c through the annular passage which opens between third and second sleeves 56, 47. Therefore, the more the pressure of hydraulic signal 30 is greater, more there is fluidic communication between cylinder 2 and accumulators 22a, 22b. Such fluidic communication is, however, limited by narrowing 48 which partially obstructs passage of fluid. On the contrary, if the pressure of hydraulic signal 30 is low, the passage of fluid is made difficult by a further "orifice" defined by the very narrow passage between third and second sleeves 56, 47 that are closer one to the other.

In the closed position of figure 4, imaging that a fluid overpressure impulse P comes from cylinder side, i.e. from third opening 40c, such pressure P will act into indentation 59, thereby imparting an axial force to third sleeve 56 and pushing these latter towards first sleeve 45. Such very thin passage allows the fluid communication from cylinder 2 towards accumulators 22a, 22b in overpressure emergency cases.

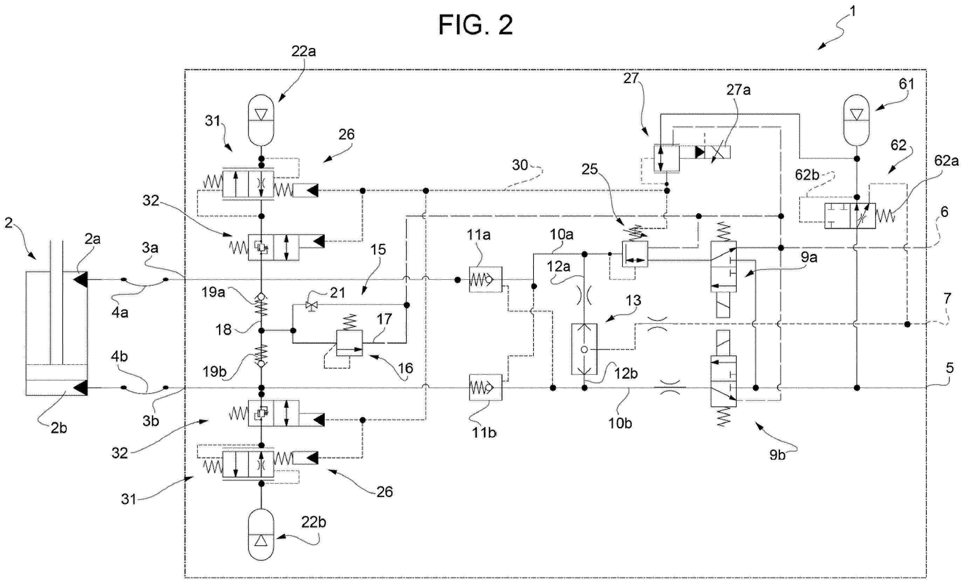

Figure 2 discloses a first embodiment of hydraulic circuit according to the present invention.

Hydraulic circuit 1 of figure 2 comprises again a control valve 27 configured to generate a hydraulic signal 30 configured to control at least one between pressure regulating valve 25 and dump modules 26.

However, in such case control valve 27 comprises a pressure regulating valve and a dedicated accumulator 61 configured to provide pressurized fluid to control valve 27 so that pressure of valve 27 is independent with respect to pressure value of pressure source 5.

In particular, control valve 27 is a proportional pressure regulating and accordingly is fluidly connected from one side to dump modules 26 and to pressure valve 25 and on the other side to discharge 6 and to accumulator 61. Proportional pressure valve is electrically actuated via a solenoid 27a and by a hydraulic signal.

Hydraulic circuit 1 further comprises a charging valve 62 fluidly interposed between source 5 and accumulator 61 and configured to allow its recharge. Charging valve 62 is advantageously a three ways - two positions valve configured to assume a first position wherein no fluid may flow between source 5 and accumulator 61 and a second position wherein fluid may flow from source 5 towards accumulator 61 and, at the same time, a load signal is generated and flows to merge with signal 7 generated by shuttle valve 12.

Charging valve 62 is maintained in its positions by the balance of a force imparted by an elastic element 62a acting on one side of the valve 62 for pushing this latter in its second position and a hydraulic signal 62b taken downwards with respect to fluid flow from source 5 towards accumulator 61 acting against force of elastic element 62a.

The operation of the above described first embodiment is the following.

The operation of hydraulic circuit is the same as in the first embodiment. It is however possible to use a pressure from accumulator 61 which has a different value with respect to source 5, thereby having an open center circuit.

When needed, via charging valve 62, it is possible to fill accumulator 61 from source 5.

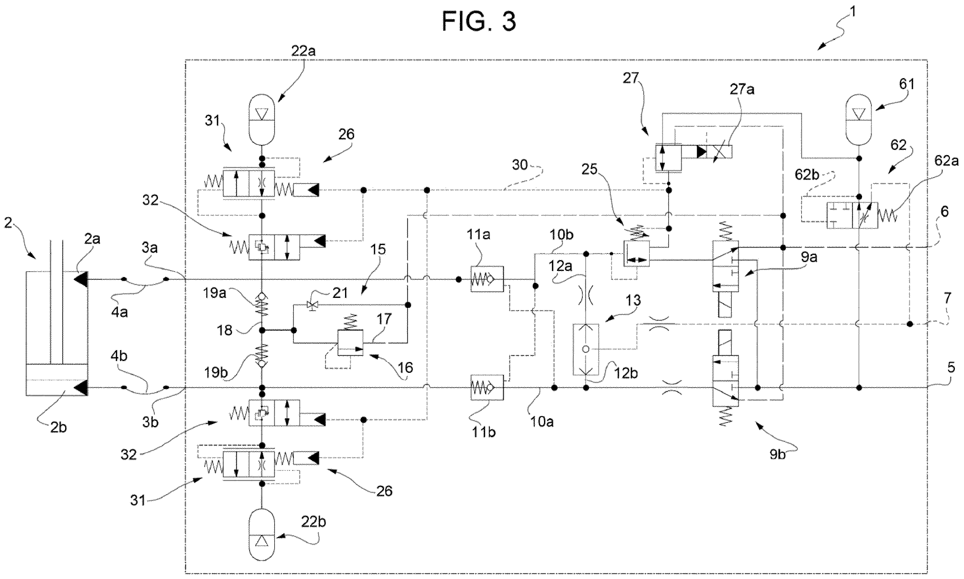

Figure 3 discloses a second embodiment of hydraulic circuit according to the present invention.

Hydraulic circuit 1 of figure 3 comprises essentially the same elements of the first embodiment of figure 2. However, in such case pressure regulating valve 25 comprises a tank line fluidly connecting this latter to control valve 27. Therefore, it is possible to discharge fluid via control valve 27 thereby regulating by discharge the pressure imparted to road chamber 2a.

In view of the foregoing, the advantages of the suspension hydraulic arrangement 1 for off-road vehicles according to the invention are apparent.

The suspension cylinder 2 is controlled only via three solenoid valves, i.e. valves 9a, 9b and control valve 27. Accordingly, cost and encumbrance with respect to existing circuits are reduced.

Furthermore, a single proportional valve allows to control settings of the suspension, i.e. levelling, stiffness and dumping, with a lows flow without peculiar requirement on quick dynamic as in existing circuits. Accordingly, there it can be provided a simple and economic adaptive suspension.

Valve 25 allows furthermore to integrate lock function and dump modules 26 allows intrinsically to react to skyhook phenomena (i.e. to quick change on fluid pressure due to, e.g., impacts on suspension cylinders due to road asperities).

It is clear that modifications can be made to the described suspension hydraulic arrangement for off-road vehicles which do not extend beyond the scope of protection defined by the claims.

For example, proposed embodiment of valves 25, 27, 31, 31 and 62 may be varied, maintaining the same function, according to typology of the off-road vehicle into which they are implemented.

Similar considerations may apply to safety module 15 or to shuttle valve 13, which may be substituted by technically equivalent means.

## Claims

1. - Hydraulic arrangement (1) for controlling a hydraulic cylinder (2) of a suspension of an off-road vehicle,
said hydraulic arrangement (1) comprising a first output (3a) and a second output (3b) respectively configured to be fluidly connected to a road chamber (2a) and a piston chamber (2b) of said hydraulic cylinder (2), a source (5) of fluid in pressure and a discharge (6),
said hydraulic arrangement (1) comprising a first valve (9a) fluidly interposed between said source (5), said discharge (6) and a first conduit (10a) fluidly connecting said first valve (9a) with said first output (3a) and a second valve (9b) fluidly interposed between said source (5), said discharge (5) and a second conduit (10b) fluidly connecting said second valve (9b) with said second output (3b),
said hydraulic arrangement (1) comprising a first accumulator (22a) fluidly connected to said first conduit (10a) between said first output (3a) and said first valve (9a) and a first dumping module (26) fluidly interposed between said first accumulator (22a) and said first conduit (10a); and a second accumulator (22b) fluidly connected to said second conduit (10b) between said second output (3b) and said second valve (9b) and a second dumping module (26) fluidly interposed between said second accumulator (22b) and said second conduit (10b) ,
said hydraulic arrangement (1) comprising a pressure regulating valve (25) fluidly interposed on said first conduit (10a) downstream with respect to said first valve (9a), said pressure regulating valve (25) being configured to vary the pressure of the fluid flowing into said first conduit (10a),
**characterised in that** said
hydraulic arrangement (1) comprising a control valve (27) configured to generate a hydraulic signal (30) for controlling said pressure regulating valve (25) and said dump modules (26), said hydraulic signal (30) being proportional to a electric input on said control valve (27), wherein said hydraulic arrangement (1) comprises a third accumulator (61) fluidly connected to said source (5) via a charge valve (62), said control valve (27) is fluidly connected to said accumulator (61), to said discharge (6), to said regulating valve (25) and said dump modules (26), said control valve (27) an electro-actuated pressure regulating valve and wherein each of said dump modules (26) comprises a control valve (31) and a lock valve (32) fluidically in series one with respect to the other between said accumulator (22a, 22b) and said conduit (10a, 10b), said control valve (31) of each of the dump modules being interposed between said accumulator (22a, 22b) and said lock valve (32), said control valve (31) of each of the dump modules and said lock valve (32) being fluidly connected to said hydraulic signal (30),
said control valve (31) of each of the dump modules being configured to regulate the passage of fluid between said accumulator (22a, 22b) to said conduit (10a, 10b) in function of the pressure of said hydraulic signal (30),
while said lock valve (32) being configured to selectively lock the passage of fluid between said accumulator (22a, 22b) to said conduit (10a, 10b) in function of the pressure of said hydraulic signal (30).

2. - Hydraulic arrangement according to claim 1, wherein said control valve (27) is further fluidly connected to discharge.

3. - Hydraulic arrangement according to any of the preceding claims, wherein said first and second valves (9a, 9b) are electro actuated valves.

4. - Hydraulic arrangement according to any of the preceding claims, further comprising a shuttle valve (13) fluidly interposed between first and second conduits (10a, 10b), said shuttle valve (13) being configured to generate a hydraulic signal (7) configured to control the pressure of said source (5).

5. - Hydraulic arrangement according to any of the preceding claims, further comprising a first and a second isolation valves (11a, 11b) fluidly interposed respectively on said first and second conduits (10a, 10b) and configured to selectively allow the passage of fluid through themselves only in the direction of said first and second outputs (3a, 3b) .

6. - Hydraulic arrangement according to any of the preceding claims, further comprising safety module (15) fluidly interposed between said first and second conduits (10a, 10b), said safety module (15) being configured to connect at least one between said first and second conduits (10a, 10b) to discharge (6) if the pressure in one of these latter reaches a predefined threshold value.

7. - Hydraulic arrangement according claim 6, wherein said safety module (15) comprises a relief valve (16) fluidly interposed between said first and second conduits (10a, 10b) and said discharge (6).

8. - Hydraulic arrangement according to claim 1, wherein said control valve (31) of each of the dump modules and said lock valve (32) are integrated one with the other.

9. - Hydraulic arrangement according to claim 1 or 8, wherein said lock valve (32), in locked state, allows fluid safety passage if pressure of fluid in said conduit (10a, 10b) reaches a predefined threshold value.

10. - Hydraulic arrangement according to any of claim 1 to 9, wherein said control valve (31) of each of the dump modules is a proportional hydraulically actuated valve.

11. - Hydraulic arrangement according to any of claim 1 to 10,
wherein said dump module (26) comprises a housing (40) defining a first opening (40a) fluidly connected to said control valve (27) for allowing the passage of said hydraulic signal (30), a second opening (40b) fluidly connected to said accumulator (22a, 22b) and a third opening (40c) fluidly connected to said conduit (10a, 10b),
said housing (40) defining an inner cavity (41) comprising a first, a second, a third and a fourth portions (41a, 41b, 41c, 41d) having each a diameter lower than the precedent thereby defining a plurality of shoulders (42, 43, 44), said first opening (40a) being fluidly connected to said first and third portions (41a, 41c) of said cavity, allowing passage of said hydraulic signal,
said first portion (41a) housing a first fixed sleeve (45) fluidly communicating with said first opening (40a) and defining an inner cavity (51), fluidly communicating with said first opening (40a), into which an actuator (52) may slide thanks to the force of said hydraulic signal (30), said actuator (52) protrudes, passing through said sleeve, into said third portion (41), the movement of said actuator (52) being opposed by an elastic element (53),
said fourth portion (41d) housing a second hollow sleeve (47) movably along an axis (A) in common with said second opening (45b) and defining a narrowing (48) for the passage of fluid between said third and second openings (40b, 40c) inside said second sleeve (47), the movement of said second sleeve (47) being opposed by said actuator (52) configured to impart a force to said second sleeve (47),
said module (26) further comprising a third sleeve (56) housed in said second portion (41b) and sliding on said first sleeve (45) between two of said shoulders (42, 43) thanks to the force of said hydraulic signal (30), the movement of said third sleeve (56) being opposed by an elastic member (58), said third sleeve (56) assuming a first position into which it contacts said second sleeve (47) avoiding passage of fluid between said third and second openings (40b, 40c) through said second sleeve (47) and a second position into which it does not contact said second sleeve (47), allowing passage of fluid between said third and second openings (40b, 40c) through said second sleeve (47).

12. - Hydraulic arrangement according to claim 11, wherein said second sleeve (56) comprises a recess (59) realized in an edge cooperating with said second sleeve (47), said recess (59) allowing to impart a force on said third sleeve (56) to allow passage of fluid through said second sleeve (47) if a predefined value overpressure comes from said third opening (40c).

## Patentansprüche

1. Hydraulikanordnung (1) zur Steuerung eines Hydraulikzylinders (2) einer Federung eines Geländefahrzeugs,
wobei die Hydraulikanordnung (1) einen ersten Ausgang (3a) und einen zweiten Ausgang (3b), die jeweils eingerichtet sind, um mit einer Stangenkammer (2a) und einer Kolbenkammer (2b) des Hydraulikzylinders (2) in Fluidverbindung gebracht zu werden, eine Quelle (5) für mit Druck beaufschlagtes Fluid, und einen Auslass (6) aufweist,
wobei die Hydraulikanordnung (1) ein erstes Ventil (9a), das in Fluidverbindung angeordnet ist zwischen der Quelle (5), dem Auslass (6), und einem ersten Leitungselement (10a), welches das erste Ventil (9a) mit dem ersten Ausgang (3a) in Fluidverbindung bringt, und ein zweites Ventil (9b), das in Fluidverbindung angeordnet ist zwischen der Quelle (5), dem Auslass (6), und einem zweiten Leitungselement (10b), welches das zweite Ventil (9b) mit dem zweiten Ausgang (3b) in Fluidverbindung bringt, aufweist,
wobei die Hydraulikanordnung (1) einen ersten Speicher (22a), der mit dem ersten Leitungselement (10a) zwischen dem ersten Ausgang (3a) und dem ersten Ventil (9a) in Fluidverbindung steht, und ein erstes Auslassmodul (26), das zwischen dem ersten Speicher (22a) und dem ersten Leitungselement (10a) in Fluidverbindung angeordnet ist, aufweist; und einen zweiten Speicher (22b), der mit dem zweiten Leitungselement (10b) zwischen dem zweiten Ausgang (3b) und dem zweiten Ventil (9b) in Fluidverbindung steht, und ein zweites Auslassmodul (26), das zwischen dem zweiten Speicher (22b) und dem zweiten Leitungselement (10b) in Fluidverbindung angeordnet ist, aufweist,
wobei die Hydraulikanordnung (1) ein Drucksteuerungsventil (25) aufweist, das mit dem ersten Leitungselement (10a) stromab bezüglich des ersten Ventils (9a) in Fluidverbindung angeordnet ist, wobei das Drucksteuerungsventil (25) eingerichtet ist, um den Druck des Fluids, das in das erste Leitungselement (10a) strömt, zu verändern,
**dadurch gekennzeichnet, dass**
die Hydraulikanordnung (1) ein Steuerventil (27) aufweist, das eingerichtet ist, um ein Hydrauliksignal (30) zur Steuerung des Drucksteuerungsventils (25) und der Auslassmodule (26) zu erzeugen, wobei das Hydrauliksignal (30) proportional zu einem elektrischen Eingangssignal an dem Steuerungsventil (27) ist, wobei die Hydraulikanordnung (1) einen dritten Speicher (61) aufweist, der mit der Quelle (5) über ein Ladeventil (62) in Fluidverbindung steht, wobei das Steuerventil (27) mit dem Speicher (61), mit dem Auslass (6), mit dem Steuerungsventil (25) und mit den Auslassmodulen (26) in Fluidverbindung steht, wobei das Steuerventil (27) ein elektrisch betätigtes Drucksteuerungsventil ist und wobei jedes der Auslassmodule (26) ein Steuerventil (31) und ein Sperrventil (32) aufweist, die miteinander in Reihe zwischen dem Speicher (22a, 22b) und dem Leitungselement (10a, 10b) in Fluidverbindung angeordnet sind, wobei das Steuerventil (31) eines jeden der Auslassmodule zwischen dem Speicher (22a, 22b) und dem Sperrventil (32) angeordnet ist, und wobei das Steuerventil (31) eines jeden der Auslassmodule und das Sperrventil (32) mit dem Hydrauliksignal (30) in Fluidverbindung stehen,
wobei das Steuerventil (31) eines jeden der Auslassmodule eingerichtet ist, um den Durchfluss von Fluid zwischen dem Speicher (22a, 22b) zu dem Leitungselement (10a, 10b) als eine Funktion des Drucks des Hydrauliksignals (30) zu steuern,
während das Sperrventil (32) eingerichtet ist, um wahlweise den Durchfluss von Fluid zwischen dem Speicher (22a, 22b) zu dem Leitungselement (10a, 10b) als eine Funktion des Drucks des Hydrauliksignals (30) zu sperren.

2. Hydraulikanordnung nach Anspruch 1, wobei das Steuerventil (27) weiterhin mit dem Auslass in Fluidverbindung steht.

3. Hydraulikanordnung nach einem der vorhergehenden Ansprüche, wobei das erste und das zweite Ventil (9a, 9b) elektrisch betätigte Ventile sind.

4. Hydraulikanordnung nach einem der vorhergehenden Ansprüche, weiterhin aufweisend ein Wechselventil (13), das zwischen dem ersten und dem zweiten Leitungselement (10a, 10b) in Fluidverbindung angeordnet ist, wobei das Wechselventil (13) eingerichtet ist, um ein Hydrauliksignal (7) zu erzeugen, das eingerichtet ist, um den Druck der Quelle (5) zu steuern.

5. Hydraulikanordnung nach einem der vorhergehenden Ansprüche, weiterhin aufweisend ein erstes und ein zweites Absperrventil (11a, 11b), die mit dem ersten bzw. dem zweiten Leitungselement (10a, 10b) in Fluidverbindung angeordnet sind und eingerichtet sind, um wahlweise den Durchfluss von Fluid durch diese hindurch nur in Richtung des ersten und des zweiten Ausgangs (3a, 3b) zu ermöglichen.

6. Hydraulikanordnung nach einem der vorhergehenden Ansprüche, weiterhin aufweisend ein Sicherheitsmodul (15), das zwischen dem ersten und dem zweiten Leitungselement (10a, 10b) in Fluidverbindung angeordnet ist, wobei das Sicherheitsmodul (15) eingerichtet ist, um das erste und/oder das zweite Leitungselement (10a, 10b) mit dem Auslass (6) zu verbinden, wenn der Druck in einem der letzteren einen vorbestimmten Schwellenwert erreicht.

7. Hydraulikanordnung nach Anspruch 6, wobei das Sicherheitsmodul (15) ein Entlastungsventil (16) aufweist, das zwischen dem ersten und dem zweiten Leitungselement (10a, 10b) und dem Auslass (6) in Fluidverbindung angeordnet ist.

8. Hydraulikanordnung nach Anspruch 1, wobei das Steuerventil (31) eines jeden der Auslassmodule und das Sperrventil (32) miteinander integriert sind.

9. Hydraulikanordnung nach Anspruch 1 oder 8, wobei das Sperrventil (32), im gesperrten Zustand, einen Fluid-Sicherheitsdurchlass ermöglicht, wenn der Fluiddruck in dem Leitungselement (10a, 10b) einen vorbestimmten Schwellenwert erreicht.

10. Hydraulikanordnung nach einem der Ansprüche 1 bis 9, wobei das Steuerventil (31) eines jeden der Auslassmodule ein proportional hydraulisch betätigtes Ventil ist.

11. Hydraulikanordnung nach einem der Ansprüche 1 bis 10, wobei das Auslassmodul (26) ein Gehäuse (40) aufweist, das eine erste Öffnung (40a), die mit dem Steuerventil (27) in Fluidverbindung steht, um den Durchfluss des Hydrauliksignals (30) zu ermöglichen, eine zweite Öffnung (40b), die mit dem Speicher (22a, 22b) in Fluidverbindung steht, und eine dritte Öffnung (40c), die mit dem Leitungselement (10a, 10b) in Fluidverbindung steht, aufweist,
wobei das Gehäuse (40) einen Innenhohlraum (41) definiert, der einen ersten, einen zweiten, einen dritten und einen vierten Abschnitt (41a, 41b, 41c, 41d) aufweist, die jeweils einen Durchmesser haben, der geringer als der vorhergehende ist, sodass sie eine Mehrzahl von Absätzen (42, 43, 44) bilden, wobei die erste Öffnung (40a) mit dem ersten und dem dritten Abschnitt (41a, 41c) des Hohlraums in Fluidverbindung steht, sodass der Durchfluss des Hydrauliksignals ermöglicht wird,
wobei der erste Abschnitt (41a) eine erste befestigte Hülse (45) aufnimmt, die mit der ersten Öffnung (40a) in Fluidverbindung steht und einen Innenhohlraum (51) definiert, der mit der ersten Öffnung (40a), in die ein Betätigungselement (52) infolge der Kraft des Hydrauliksignals (30) gleiten kann, in Fluidverbindung steht, wobei das Betätigungselement (52), das sich durch die Hülse erstreckt, in den dritten Abschnitt (41) vorsteht, wobei der Bewegung des Betätigungselements (52) ein elastisches Element (53) entgegenwirkt,
wobei der vierte Abschnitt (41d) eine zweite hohle Hülse (47) aufnimmt, die entlang einer Achse (A) in Übereinstimmung mit der zweiten Öffnung (45b) beweglich ist und eine Verengung (48) für den Durchfluss von Fluid zwischen der dritten und der zweiten Öffnung (40b, 40c) in der zweiten Hülse (47) bildet, wobei der Bewegung der zweiten Hülse (47) das Betätigungselement (52) entgegenwirkt, das eingerichtet ist, um die zweite Hülse (47) mit einer Kraft zu beaufschlagen,
wobei das Modul (26) weiterhin eine dritte Hülse (56) aufweist, die in dem zweiten Abschnitt (41b) aufgenommen ist und an der ersten Hülse (45) zwischen zwei der Absätze (42, 43) infolge der Kraft des Hydrauliksignals (30) gleitet, wobei der Bewegung der dritten Hülse (56) ein elastisches Element (58) entgegenwirkt, wobei die dritte Hülse (56) eine erste Position einnimmt, in der sie die zweite Hülse (47) kontaktiert, wodurch sie den Durchfluss von Fluid zwischen der dritten und der zweiten Öffnung (40b, 40c) durch die zweite Hülse (47) verhindert, und eine zweite Position einnimmt, in der sie die zweite Hülse (47) nicht kontaktiert (47), wodurch sie den Durchfluss von Fluid zwischen der dritten und der zweiten Öffnung (40b, 40c) durch die zweite Hülse (47) ermöglicht.

12. Hydraulikanordnung nach Anspruch 11, wobei die zweite Hülse (56) eine Ausnehmung (59) aufweist, die in einem Randabschnitt verwirklicht ist, der mit der zweiten Hülse (47) zusammenwirkt, wobei die Ausnehmung (59) ermöglicht, dass die dritte Hülse (56) mit einer Kraft beaufschlagt wird, um einen Durchfluss von Fluid durch die zweite Hülse (47) zu ermöglichen, wenn ein vorbestimmter Überdruckwert von der dritten Öffnung (40c)ausgeht.

## Revendications

1. - Dispositif hydraulique (1) de commande d'un cylindre hydraulique (2) d'une suspension d'un véhicule tout-terrain,
ledit dispositif hydraulique (1) comprenant une première sortie (3a) et une deuxième sortie (3b) respectivement configurées pour être reliées fluidiquement à une chambre de route (2a) et à une chambre de piston (2b) dudit cylindre hydraulique (2), à une source (5) de fluide comprimé et à une décharge (6),
ledit dispositif hydraulique (1) comprenant une première vanne (9a) interposée fluidiquement entre ladite source (5), ladite décharge (6) et un premier conduit (10a) connectant fluidiquement ladite première vanne (9a) et ladite première sortie (3a) et une deuxième vanne (9b) interposée fluidiquement entre ladite source (5), ladite décharge (6) et un deuxième conduit (10b) connectant fluidiquement ladite deuxième vanne (9b) et ladite deuxième sortie (3b),
ledit dispositif hydraulique (1) comprenant un premier accumulateur (22a) connecté fluidiquement audit premier conduit (10a) entre ladite première sortie (3a) et ladite première vanne (9a) et un premier module de déchargement (26) interposé fluidiquement entre ledit premier accumulateur (22a) et ledit premier conduit (10a) ; et un deuxième accumulateur (22b) relié fluidiquement audit deuxième conduit (10b) entre ladite deuxième sortie (3b) et ladite deuxième vanne (9b) et un deuxième module de déchargement (26) interposé fluidiquement entre ledit deuxième accumulateur (22b) et ledit deuxième conduit (10b),
ledit dispositif hydraulique (1) comprenant une vanne de régulation de pression (25) interposée fluidiquement sur ledit premier conduit (10a) en aval par rapport à ladite première vanne (9a), ladite vanne de régulation de pression (25) étant configurée pour varier la pression du fluide entrant dans ledit premier conduit (10a),
**caractérisé en ce que**
ledit dispositif hydraulique (1) comprenant une vanne de commande (27) configurée pour générer un signal hydraulique (30) pour commander ladite vanne de régulation de pression (25) et lesdits modules de déchargement(26), ledit signal hydraulique (30) étant proportionnel à une entrée électrique sur ladite vanne de commande (27), dans lequel ledit dispositif hydraulique (1) comprend un troisième accumulateur (61) connecté fluidiquement à ladite source (5) par le biais d'une vanne de charge (62), ladite vanne de commande (27) est reliée fluidiquement audit accumulateur (61), à ladite décharge (6), à ladite vanne de régulation (25) et auxdits modules de déchargement (26), ladite vanne de commande (27) étant une vanne de régulation de pression activée par électro-actionnement et dans laquelle chacun desdits modules de déchargement (26)comprend une vanne de commande (31) et une vanne de blocage (32) fluidiquement en série l'une avec l'autre entre ledit accumulateur (22a, 22b) et ledit conduit (10a, 10b), ladite vanne de commande (31) de chacun des modules de déchargement étant interposée entre ledit accumulateur (22a, 22b) et ladite vanne de blocage (32), ladite vanne de commande (31) de chacun des modules de déchargement et de ladite vanne de blocage (32) étant reliées fluidiquement audit signal hydraulique (30),
ladite vanne de commande (31) de chaque module de déchargement étant configurée pour réguler le passage du fluide entre ledit accumulateur (22a, 22b) vers ledit conduit (10a, 10b) en fonction de la pression dudit signal hydraulique (30),
pendant que ladite vanne de blocage (32) est configurée pour bloquer sélectivement le passage du fluide dudit accumulateur (22a, 22b) vers ledit conduit (10a, 10b) en fonction de la pression dudit signal hydraulique (30).

2. - Dispositif hydraulique selon la revendication 1, dans lequel ladite vanne de commande (27) est en outre reliée fluidiquement afin de décharger.

3. - Dispositif hydraulique selon l'une quelconque des revendications précédentes, dans lequel lesdites première et deuxième vannes (9a, 9b) sont des vannes électro-actionnées.

4. - Dispositif hydraulique selon l'une quelconque des revendications précédentes, comprenant en outre une vanne d'arrêt (13) interposée fluidiquement entre les premier et deuxième conduits (10a, 10b), ladite vanne d'arrêt (13) étant configurée pour générer un signal hydraulique (7) configuré pour commander la pression de ladite source (5).

5. - Dispositif hydraulique selon l'une quelconque des revendications précédentes, comprenant en outre une première et une deuxième vanne d'isolement (11a, 11b) respectivement interposées fluidiquement sur lesdits premier et deuxième conduits (10a, 10b) et configurées pour permettre le passage sélectif de fluide à travers celles-ci, uniquement dans la direction desdites première et deuxième sorties (3a, 3b).

6. - Dispositif hydraulique selon l'une quelconque des revendications précédentes, comprenant en outre un module de sécurité (15) interposé fluidiquement entre lesdits premier et deuxième conduits (10a, 10b), ledit module de sécurité (15) étant configuré pour connecter au moins un desdits premier et deuxième conduits (10a, 10b) afin de décharger (6) si la pression dans un de ces derniers atteint une valeur seuil prédéfinie.

7. Dispositif hydraulique selon la revendication 6, dans lequel ledit module de sécurité (15) comprend une soupape de décharge (16) interposée fluidiquement entre lesdits premier et deuxième conduits (10a, 10b) et ladite décharge (6).

8. - Dispositif hydraulique selon la revendication 1, dans lequel ladite vanne de commande (31) de chacun des modules de déchargement et ladite vanne de blocage (32) sont intégrées l'une à l'autre.

9. - Dispositif hydraulique selon la revendication 1 ou 8, dans lequel ladite vanne de blocage (32), en position fermée, permet un passage du fluide sûr si la pression du fluide dans ledit conduit (10a, 10b) atteint une valeur seuil prédéfinie.

10. - Dispositif hydraulique selon l'une quelconque des revendications 1 à 9, dans lequel ladite vanne de commande (31) de chaque module de déchargement est une vanne proportionnelle actionnée hydrauliquement.

11. - Dispositif hydraulique selon l'une quelconque des revendications 1 à 10, dans lequel ledit module de déchargement (26) comprend un boîtier (40) définissant une première ouverture (40a) reliée fluidiquement à ladite vanne de commande (27) pour permettre le passage dudit signal hydraulique (30), une deuxième ouverture (40b) reliée fluidiquement audit accumulateur (22a, 22b) et une troisième ouverture (40c) reliée fluidiquement audit conduit (10a, 10b),
ledit boîtier (40) définissant une cavité interne (41) comprenant une première, une deuxième, une troisième et une quatrième parties (41a, 41b, 41c, 41d) ayant chacune un diamètre inférieur à celui de la partie précédente, définissant ainsi une pluralité d'éléments d'épaulement (42, 43, 44), ladite première ouverture (40a) étant reliée fluidiquement auxdites première et deuxième parties (41a, 41c) de ladite cavité, permettant le passage dudit signal hydraulique,
ladite première partie (41a) logeant un premier manchon fixe (45) communiquant fluidiquement avec ladite première ouverture (40a) et définissant une cavité interne (51), communiquant fluidiquement avec ladite première ouverture (40a), dans laquelle un actionneur (52) peut glisser grâce à la force dudit signal hydraulique (30), ledit actionneur (52) fait saillie, traversant ledit manchon, dans ladite troisième partie (41), le mouvement dudit actionneur (52) étant contré par un élément élastique (53),
ladite quatrième partie (41d) logeant un deuxième manchon creux (47) relié de manière mobile le long d'un axe (A) avec ladite deuxième ouverture (45b) et définissant un rétrécissement (48) pour le passage du fluide entre lesdites troisième et deuxième ouvertures (40b, 40c) dans ledit deuxième manchon (47), le mouvement dudit deuxième manchon (47) étant contré par ledit actionneur (52) configuré pour communiquer une force sur ledit deuxième manchon (47),
ledit module (26) comprenant en outre un troisième manchon (56) logé dans ladite deuxième partie (41b) et glissant sur ledit premier manchon (45) entre deux desdits éléments d'épaulement (42, 43) grâce à la force dudit signal hydraulique (30), le mouvement dudit troisième manchon (56) étant opposé par un élément élastique (58), ledit troisième manchon (56) supposant une première position dans laquelle il vient en prise avec ledit deuxième manchon (47) évitant le passage de fluide entre lesdites troisième et deuxième ouvertures (40b, 40c) à travers ledit deuxième manchon (47) et une deuxième position dans laquelle il ne vient pas en prise avec ledit deuxième manchon (47), permettant le passage du fluide entre lesdites troisième et deuxième ouvertures (40b, 40c) à travers ledit deuxième manchon (47).

12. - Dispositif hydraulique selon la revendication 11, dans lequel ledit deuxième manchon (56) comprend une cavité (59) réalisée dans un bord coopérant avec ledit deuxième manchon (47), ladite cavité (59) permettant d'appliquer une force sur ledit troisième manchon (56) afin de permettre le passage du fluide à travers ledit deuxième manchon (47) si une surpression d'une valeur prédéfinie provient de ladite troisième ouverture (40c).
